# EUROPÄISCHE PATENTANMELDUNG

(11) **EP 2 520 453 A1**
(43) Veröffentlichungstag der Anmeldung: **07.11.2012**
(21) Anmeldenummer: 11164619.6
(22) Anmeldetag: 03.05.2011
(51) Int. Cl.: B60K 35/00, G03B 21/56, G02B 27/01

(54) **Vorrichtung zur Darstellung visueller Informationen in einem Kraftfahrzeug**

(71) Anmelder: PEGUFORM GMBH, 79268 Bötzingen (DE)
(72) Erfinder: Johannböke, Eckhard, 79346 Endingen (DE); Klipfel, Michael, 79369 Wyhl (DE)
(74) Vertreter: Patentanwälte Westphal, Mussgnug & Partner

(57) **Zusammenfassung**

Die vorliegende Erfindung betrifft eine Vorrichtung zur Darstellung visueller Informationen in einem Kraftfahrzeug, wobei die Vorrichtung ein Kraftfahrzeuginnenverkleidungsbauteil sowie eine Rückprojektionseinheit 4 umfasst. Dabei ist auf der Bauteiloberfläche mindestens ein lichtdurchlässiger Oberflächenbereich aus Kunststoff angeordnet, der eine der Rückprojektionseinheit 4 zugeordnete Projektionsfläche 3 für die darzustellenden visuellen Informationen bildet.

## Beschreibung

Die vorliegende Erfindung betrifft eine Vorrichtung zur Darstellung visueller Informationen in einem Kraftfahrzeug, wobei die Vorrichtung ein Kraftfahrzeuginnenverkleidungsbauteil und eine Rückprojektionseinheit umfasst, die auf der in dem Kraftfahrzeuginnenraum abgewandten Rückseite des Innenverkleidungsbauteils angeordnet ist.

Heutzutage werden die Kraftfahrzeuge mit immer mehr Einrichtungen zur Anzeige von Informationen oder technischen Daten ausgerüstet. Dafür werden die unterschiedlichsten Lösungen zur Ausbildung und Anordnung derartiger Vorrichtungen vorgeschlagen.

In der DE 102 26 451 C1 wird eine Vorrichtung zum Darstellen von visuellen Informationen in Fahrzeugen beschrieben, bei der eine dem Fahrzeuginnenraum zugewandte flächige Unterseite eines Abschnitts des Fahrzeugdaches eine einer Projektionsvorrichtung zugeordnete Projektionsfläche für die darzustellende Information bildet. Die zugeordnete Projektionsvorrichtung ist beispielsweise in der Kopfstütze, in der Hutablage oder an der B- oder C-Säule angeordnet.

Die DE 10 2005 020 260 A1 beschreibt ein Anzeigesystem für Kraftfahrzeuge, bei dem wahlweise eine aus einer Vielzahl von Projektionsflächen an verschiedenen Positionen im Fahrzeuginnenraum benutzungszustands- und/oder fahrsituationsabhängig zur Anzeige von Bilddaten und/oder Informationen verwendet wird. Das Anzeigesystem umfasst einen elektronisch angesteuerten optischen Projektor, der verschiedene bzw. veränderliche Projektionsflächen im Fahrzeug belichtet.

Weiterhin wird in der DE 202 10 601 U1 eine Einrichtung zur Anzeige von Informationen und technischen Daten offenbart, bei der auf der dem Fahrzeuginnenraum abgewandten Seite eines Projektionsschirms eine Projektionseinheit angeordnet ist, die mit einem Computer zur Verarbeitung der anzuzeigenden Daten verbunden ist, wobei der Projektionsschirm aus holografisch optischen Elementen besteht, die ein Lichtstrahlenbündel der Projektionseinheit zum Betrachter des Projektionsschirms lenken und gleichzeitig aufweiten.

Bei allen bekannten Systemen werden zur Darstellung der Informationen besondere separate Projektionsflächen eingesetzt, die in der Regel im Fahrzeuginnenraum als separate Baueinheiten angeordnet sind.

Bei der Anordnung derartiger Baueinheiten ergibt sich nicht nur das Problem, dass diese Baueinheiten der Fahrzeuginnenverkleidung angepasst werden müssen, was angesichts der Vielzahl der Instrumentenanzeigen, die im Fahrzeuginnenraum angeordnet sind, hohe Anforderungen an den Designer und Konstrukteur stellt, der vor der Aufgabe steht, ein zur übrigen Ausstattung des Kraftfahrzeugs passendes Design für eine derartige Anzeigentafel zu entwickeln. Darüber hinaus generiert die Herstellung eines Innenverkleidungsbauteils mit einer zusätzlichen separaten Baueinheit auch zusätzliche Kosten, die sich aus dem zusätzlichen Aufwand für Werkzeug- und Montagezeit ergeben.

Aufgabe der vorliegenden Erfindung ist es daher, eine Vorrichtung zur Darstellung visueller Informationen in einem Kraftfahrzeug anzubieten, die Vorteile gegenüber dem Stand der Technik hat.

Gelöst wird diese Aufgabe durch eine Vorrichtung mit den Merkmalen des Anspruchs 1. Vorteilhafte Ausgestaltungen und Weiterentwicklungen der vorliegenden Erfindung sind Gegenstand der Unteransprüche.

Die der Erfindung zugrunde liegende Idee besteht darin, vorhandene Kunststoffoberflächen im Bereich der Innenverkleidung von Kraftfahrzeugen so auszulegen, dass sie dazu genutzt werden können, mit statischen oder bewegten Bildern belegt zu werden. Ziel ist es letztendlich, beliebig geformte bzw. lediglich auf Grund ihrer technischen Funktion in besonderer Weise ausgebildete Bereiche des Innenraums mit frei programmierbaren bzw. ladbaren Mustern oder Informationen zu belegen, womit nicht nur der Fahrkomfort und die Ergonomie im Fahrzeug erhöht wird, sondern sich auch deutlich mehr Freiheitsgrade für die Gestaltung des Innenraums des Kraftfahrzeugs ergeben. Vorhandene, bisher ungenutzte Oberflächen sollen zur Übertragung visueller Informationen genutzt werden.

Gelöst wird die Aufgabe durch eine Vorrichtung zur Darstellung visueller Informationen in einem Kraftfahrzeug, die ein Kraftfahrzeuginnenverkleidungsbauteil sowie eine Rückprojektionseinheit umfasst, wobei die Rückprojektionseinheit auf der dem Kraftfahrzeuginnenraum abgewandten Rückseite des Innenverkleidungsbauteil angeordnet ist. Die Bauteiloberfläche weist mindestens einen lichtdurchlässigen Oberflächenbereich aus Kunststoff auf, der eine der Rückprojektionseinheit zugeordnete Projektionsfläche für die darzustellenden visuellen Informationen bildet. Dabei ist die Projektionsfläche integraler und baulich nicht hervorgehobener oder separierter Bestandteil der Bauteiloberfläche.

Die Oberfläche des Innenverkleidungsbauteils kann als Formhaut, wie z.B. als Spritzgießhaut, Slush-Haut, Kunststoff-Folie, PUR-Gießhaut, PUR-Sprühhaut oder gesprühte PVC-Solid-Haut, ausgebildet sein oder direkt als sichtbare Oberfläche eines Spritzgussbauteils.

Bei einer bevorzugten Ausgestaltung der vorliegenden Erfindung ist die Oberfläche des Innenverkleidungsbauteils eine lichtdurchlässige Slush-Haut. Zur Stabilisierung der flexiblen Slush-Haut ist diese in dem lichtdurchlässigen Oberflächenbereich, welcher der Rückprojektionseinheit als Projektionsfläche zugeordnet ist, mit einem transparenten Kunststoff stabilisiert, der beispielsweise durch Sintern, Sprühen, Spritzen, Schäumen oder Gießen aufgebracht werden kann, während in den in den übrigen Bereichen der Slush-Haut ein konventionelles nichttransparentes Material vorgesehen ist. Der stabilisierende transparente Kunststoff muss nach Möglichkeit vollkommen frei von Lufteinschlüssen sein, um eine Lichtstreuung zu vermeiden, wodurch die Übertragungsqualität gemindert würde.

Alternativ kann zur Stabilisierung der Formhaut auch ein fertiges Kunststoffteil, wie z.B. eine PC-Scheibe, durch Verkleben oder Aufsintern mit der Formhaut verbunden werden.

Die Slush-Haut selber ist bevorzugt mit Pigmenten eingefärbt, sodass der lichtdurchlässige Oberflächenbereich, der als Projektionsfläche vorgesehen ist, sich im eingebauten Zustand des Innenverkleidungsbauteils farblich nicht von den übrigen Bereichen abhebt. Dieser mögliche störende Effekt wird noch zusätzlich dadurch unterdrückt, dass der Projektionsbereich auf der Rückseite des Innenverkleidungsbauteils mit einer lichtabsorbierenden schwarzen Hülle ausgekleidet ist bzw. die Projektionseinheit in einem schwarzen Kasten auf der Rückseite des Innenverkleidungsbauteils angeordnet ist.

Die vorliegende Erfindung ist jedoch nicht auf Innenverkleidungsbauteile beschränkt, deren Oberfläche durch Formhäute gebildet werden, sondern kann auch in den Bauteilen direkt mit spritzgegossenen Oberflächen realisiert werden. Dabei kann das gesamte Spritzgussbauteil aus einem lichtdurchlässigen Kunststoff gefertigt sein, wobei dann die außerhalb der Projektionsfläche liegenden Bereiche des Bauteils auf ihrer dem Fahrzeuginnenraum abgewandten Rückseite zusätzlich mit einer lichtabsorbierenden Schicht beschichtet werden. Die Beschichtung kann beispielsweise durch Lackieren, Verchromen oder Bedampfen vorgenommen werden.

Eine weitere Möglichkeit zur Realisierung der vorliegenden Erfindung für ein Spritzgussbauteil ergibt sich daraus, dass zwei unterschiedliche Kunststoffe gespritzt werden, wobei dann der die Projektionsfläche bildende Bereich in einem separaten Spritzgießvorgang aus einem lichtdurchlässigen Kunststoff gefertigt wird, wobei die Reihenfolge des 2-Komponenten-Spritzgießens frei variabel ist.

Auch in diesen Fällen werden die Kunststoffe wiederum vorteilhaft mit Pigmenten eingefärbt, um die Übergänge zwischen den einzelnen Bereichen zu verbergen.

Als Projektionseinheit werden vorzugsweise Mini-Beamer, LED-Kleinprojektoren oder Handy-Beamer eingesetzt, die mittlerweile soweit miniaturisiert sind, dass sie problemlos auf der Rückseite eines Innenverkleidungsbauteils eingebaut werden können, ohne dass zusätzlich für die Projektionseinheit Bauraum geschaffen werden muss. So können Mini-Beamer oder LED-Kleinprojektoren beispielsweise über oder im Handschuhfach, in der Mittelkonsole oder auch hinter einer Zierleiste angeordnet werden.

Eine vorteilhafte Ausgestaltung der vorliegenden Erfindung sieht vor, dass ein Handy-Beamer als mobile Projektionseinheit eingesetzt wird, die dann bei Bedarf in einer dafür vorgesehenen Station eingeführt und nach Gebrauch wieder entfernt werden kann. Die Station kann analog zu den stationären Projektionseinheiten vorteilhaft im Bereich des Handschuhfaches, einer Zierleiste oder der Mittelkonsole vorgesehen sein.

Eine weitere vorteilhafte Ausgestaltung der vorliegenden Erfindung sieht vor, dass zur Projektion der darzustellenden visuellen Informationen auf die Projektionsfläche Spiegel und/oder zusätzliche Linsen vorgesehen sind, wodurch der Abstand zwischen Projektionseinheit und Rückprojektionsfläche weiter reduziert werden kann. Dabei können Linsen zwischen der Projektionseinheit und der Projektionsfläche angeordnet oder direkt mit der Projektionseinheit kombiniert sein.

Ein bevorzugtes Bauteil für die Realisierung der vorliegenden Erfindung ist beispielsweise eine Instrumententafel, die in der Regel geeignete Flächen aufweist, die als Projektionsfläche dienen können und vor allem auch im Blickfeld eines möglichen Betrachters liegen. Hinzu kommt, dass hinter der Instrumententafel ausreichend Bauraum zur Verfügung steht, um die Rückprojektionseinheit zu integrieren.

Im Folgenden wird die vorliegende Erfindung anhand von Figuren zusätzlich erläutert.

Dabei zeigen:
- Fig. 1: in perspektivischer Darstellung einen Ausschnitt der Innenverkleidung im Frontbereich eines Fahr-zeuges und die
- Fig. 2 bis 4: jeweils einen Querschnitt einer Instrumententafel, bei dem unterschiedliche Einbauvarianten der Pro-jektionseinheiten verifiziert sind.

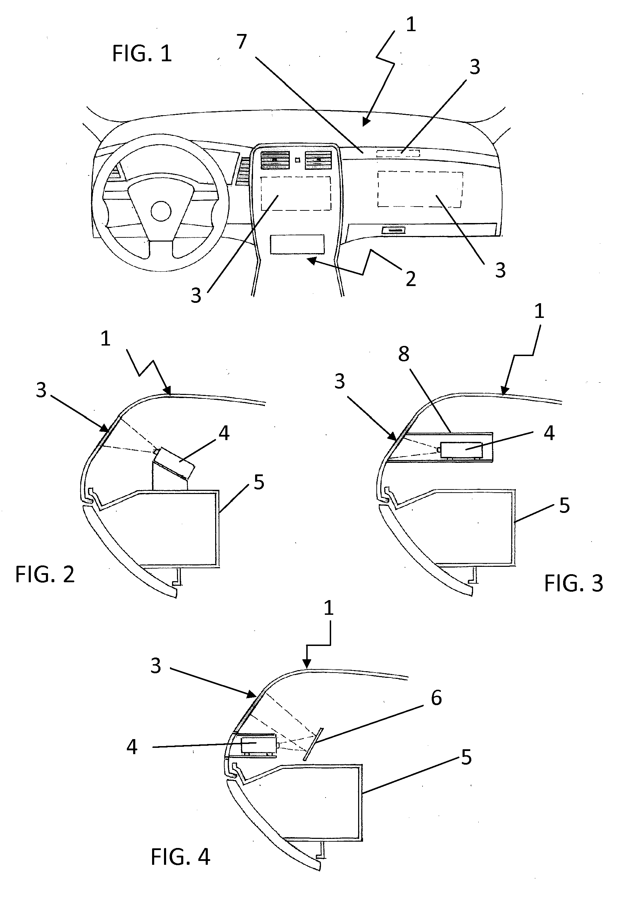

Die Figur 1 zeigt einen Ausschnitt aus dem Frontbereich des Fahrzeuginnenraums mit einer Instrumententafel 1 und einer Mittelkonsole 2, in die jeweils Projektionsflächen 3 zur Darstellung visueller Informationen integriert sind. Im Bereich der Instrumententafel ist zusätzlich eine Zierleiste 7 ebenfalls mit einer integrierten Projektionsfläche 3 dargestellt.

In den Figuren 2 bis 4 sind beispielhaft unterschiedliche Anordnungen der Projektionseinheit auf der Rückseite eines Innenverkleidungsbauteils am Beispiel einer Instrumententafel dargestellt. Es handelt sich hierbei um Querschnitte im Bereich des Handschuhfachs 5, wobei in Figur 2 der Kleinprojektor 4 auf dem Handschuhfach 5 selber angeordnet ist. In der Figur 3 ist der Kleinprojektor 4 direkt hinter der Instrumententafel 1 in einem separaten Montagekasten 8 angeordnet.

Die Projektionsfläche 3 ist in den oben angesprochenen Fällen direkt in die Instrumententafel integriert, könnte jedoch auch wahlweise im Bereich einer Zierleiste, die sich auf der Instrumententafel befindet, angeordnet sein, wie es in der Figur 1 angedeutet ist.

Ein Vorteil der Anordnung des Kleinprojektors 4 im Montagekasten 8 besteht darin, dass der Montagekasten 8 im Inneren vorteilhaft mit einer lichtabsorbierenden Schicht versehen ist, um auf diese Weise mögliche farbliche Unterschiede zwischen dem Projektionsbereich und den umliegenden Oberflächenbereichen zu überdecken.

Eine weitere Möglichkeit der Montage des Kleinprojektors 4 ist in der Figur 4 wiedergegeben, wobei der Kleinprojektor nicht direkt auf die Projektionsfläche projiziert, sondern eine Umlenkung über einen Spiegel 6 erfolgt.

Die in den Figuren 2 bis 4 aufgezeigten Möglichkeiten der An-ordnung der Projektionseinheit auf der Rückseite des Innenverkleidungsbauteils sind nur als Auszug aus einer Vielzahl von Möglichkeiten der Montage zu sehen, die sich auf Grund der Miniaturisierung des Projektors ergeben. So kann die Projektionseinheit je nach Innenverkleidungsbauteil an den unterschiedlichsten Stellen angeordnet sein.

Weitere Möglichkeiten der Anordnung selbst für Bereiche mit äußerst geringem Bauraum ergeben sich durch den zusätzlichen Einsatz geeigneter Linsentechnik, wie z.B. Glas oder Flüssigkeitslinsen, mit deren Hilfe der Abstand zwischen Projektionseinheit und Rückprojektionsfläche weiter reduziert werden kann. Auch können die in den Figuren 2 bis 4 vorgeschlagenen Positionen für den Kleinprojektor mit einer mobilen Projektionseinheit, wie z.B. einem Handy-Beamer bestückt werden, wodurch die Vielfalt der Einsatzmöglichkeiten der vorliegenden Erfindung weiter erhöht wird.

Grundvoraussetzung für die Rückprojektion ist, dass die Projektionsflächen lichtdurchlässig sind. Darüber hinaus sollte an den Projektionsflächen keine Streuung des Lichtes stattfinden, da dadurch die Übertragungsqualität leidet. Dies bedingt, dass die Oberflächen und die Schichten selbst nach Möglichkeit absolut blasenfrei sein sollten.

Selbstverständlich kann die Rückprojektionseinheit auch mit einem Computer zur Verarbeitung der darzustellenden Daten verbunden sein, über den dann Audio- und Videodaten oder auch Internetdaten auf der Projektionsfläche angezeigt werden können.

### Bezugszeichenliste

- 1: Instrumententafel
- 2: Mittelkonsole
- 3: Projektionsfläche
- 4: Projektionseinheit
- 5: Handschuhkasten
- 6: Spiegel
- 7: Zierleiste
- 8: Montagekasten

## Patentansprüche

1. Vorrichtung zur Darstellung visueller Informationen in einem Kraftfahrzeug, wobei die Vorrichtung ein Kraftfahrzeuginnenverkleidungsbauteil mit einer zum Fahrzeuginnenraum weisenden Bauteiloberfläche sowie eine Rückprojektionseinheit (4) umfasst, wobei die Rückprojektionseinheit (4) auf der dem Kraftfahrzeuginnenraum abgewandten Rückseite des Innenverkleidungsbauteils angeordnet ist, **dadurch gekennzeichnet, dass**
die Bauteiloberfläche mindestens einen lichtdurchlässigen Oberflächenbereich aus Kunststoff aufweist, wobei der mindestens eine lichtdurchlässige Oberflächenbereich aus Kunststoff eine der Rückprojektionseinheit (4) zugeordnete Projektionsfläche (3) für die darzustellenden visuellen Informationen bildet.

2. Vorrichtung nach Anspruch 1,
**dadurch gekennzeichnet, dass**
die Projektionsfläche (3) integraler, baulich nicht hervorgehobener oder separierter Bestandteil der Bauteiloberfläche ist.

3. Vorrichtung nach Anspruch 1 oder 2,
**dadurch gekennzeichnet, dass**
die Oberfläche des Innenverkleidungsbauteils eine lichtdurchlässige Formhaut umfasst.

4. Vorrichtung nach Anspruch 1,
**dadurch gekennzeichnet, dass**
die lichtdurchlässige Formhaut eine Spritzgusshaut, eine Slush-Haut, eine Kunststoff-Folie, eine PUR-Sprühhaut, eine PUR-Gießhaut oder eine gesprühte PVC-Solid-Haut umfasst.

5. Vorrichtung nach Anspruch 3 oder 4,
**dadurch gekennzeichnet, dass** die lichtdurchlässige Formhaut in dem mindestens einen lichtdurchlässigen Oberflächenbereich mit einem transparenten Kunststoff stabilisiert ist.

6. Vorrichtung nach Anspruch 1,
**dadurch gekennzeichnet, dass** das Innenverkleidungsbauteil ein lichtdurchlässiges Spritzgussbauteil ist, wobei die außerhalb der Projektionsfläche (3) liegenden Bereiche des Bauteils auf ihrer dem Fahrzeuginnenraum abgewandten Rückseite mit einer lichtabsorbierenden Schicht beschichtet sind.

7. Vorrichtung nach Anspruch 6,
**dadurch gekennzeichnet, dass** die außerhalb der Projektionsfläche (3) liegenden Bereiche des Bauteils auf ihrer dem Fahrzeuginnraum abgewandten Seite lackiert, verchromt oder bedampft sind.

8. Vorrichtung nach Anspruch 1,
**dadurch gekennzeichnet, dass** das Innenverkleidungsbauteil ein Spritzgussbauteil ist, wobei die Projektionsfläche (3) unter Verwendung eines lichtdurchlässigen Kunststoffs gebildet ist.

9. Vorrichtung nach einem der Ansprüche 1 bis 8,
**dadurch gekennzeichnet, dass** die Projektionseinheit (4) stationär oder mobil ist, wobei die Projektionseinheit einen Mini-Beamer, einen LED-Kleinprojektor oder einen Handy-Beamer umfasst.

10. Vorrichtung nach Anspruch 9,
**dadurch gekennzeichnet, dass** die Projektionseinheit (4) auf der Rückseite des Innenverkleidungsbauteils über oder im Handschuhfach (5), in der Mittelkonsole (2) oder hinter einer Zierleiste (7) angeordnet ist.

11. Vorrichtung nach einem der Ansprüche 1 bis 10,
**dadurch gekennzeichnet, dass** das Innenverkleidungsbauteil eine Instrumententafel (1) ist.

12. Vorrichtung nach einem der Ansprüche 1 bis 11,
**dadurch gekennzeichnet, dass** zur Projektion der darzustellenden visuellen Informationen auf die Projektionsfläche (3) ein Spiegel (6) und/oder zusätzliche Linsen vorgesehen sind.
